# EUROPEAN PATENT APPLICATION

(11) **EP 4 714 785 A1**
(43) Date of publication of application: **25.03.2026**
(21) Application number: 24806474.3
(22) Date of filing: 10.05.2024
(51) Int. Cl.: B62B 3/02

(54) **ELECTRIC FOLDING WAGON CAPABLE OF BEING DRIVEN**

(30) Priority: 13.05.2023 CN 202321158507 U
(71) Applicant: Shenzhen Yunrui Iot Technology Co., Ltd., Shenzhen, Guangdong 518000 (CN)
(72) Inventor: LUO, Haicheng, Dongguan, Guangdong 523000 (CN); ZHANG, Jianhua, Henan 463700 (CN); LI, Xiuqing, Hubei 441000 (CN)
(74) Representative: Valet Patent Services Limited
(86) International application number: PCT/CN2024/092345
(87) International publication number: WO 2024/235122

(57) **Abstract**

An electric folding wagon capable of being driven, the electric folding wagon comprising a folding wagon body (10), a control assembly (20) and a steering rod assembly (30). The bottom of the tail end of the folding wagon body (10) is provided with follower wheels (13); the control assembly (20) is arranged on the folding wagon body (10); the steering rod assembly (30) comprises a control rod (31), wherein the bottom end of the control rod (31) is connected to a driving wheel assembly (40), and the bottom end of the control rod (31) is also connected to a pedal rod assembly (50); one end of the pedal rod assembly (50) away from the control rod (31) is connected to the front end of the folding wagon body (10); and the driving wheel assembly (40) is electrically connected to the control assembly (20). By means of the arrangement of the pedal rod assembly (50) and the steering rod assembly (30) at the front end of the folding wagon body (10), the folding wagon body (10) has the functions of electric human-carrying and goods-carrying driving, electric power-assisted towing and folded storage, and has the characteristics of light portability and convenient movement, so as to satisfy the use requirements of various scenarios; the steering rod assembly (30) can change the use form according to the use requirements, such that the practicability is improved; and both the pedal rod assembly (50) and the steering rod assembly (30) can be folded and are collapsible, such that the amount of space occupied is reduced, thereby further improving the practicability.

## Description

### TECHNICAL FIELD

The present disclosure relates to the technical field of folding wagons, and in particular to an electric folding wagon capable of being driven.

### BACKGROUND

Folding wagons refer to a type of foldable and towable cargo cart, and are widely used for carrying and transporting goods due to their ease of use, ability to carry goods, ease of storage, and time-saving and labor-saving properties. Folding wagons are now commonly used for outdoor activities or short-distance transportation.

Conventional trailers are manually towed during use, which is time-consuming and labor-intensive, and becomes particularly inconvenient when carrying loads uphill. To address the problem, the prior art further designs a power-assisted trailer, as disclosed in Chinese Patent No. CN202220922980.0 titled "Power-Assisted Trailer", which provides electric power-assist during towing through electric wheels and a control device on the trailer body, thereby making the trailer more labor-saving and convenient during use. However, this solution still has some drawbacks. Although it reduces physical effort to some extent, manual towing is still required and it cannot carry people. When used in outdoor activities, it involves a long period of walking process, and even it is power-assisted, users can still feel fatigued.

Therefore, there is an urgent need to design an electric folding wagon capable of being driven for outdoor usage to overcome one or more deficiencies in the prior art.

### SUMMARY

In order to achieve the above objectives, the present disclosure adopts the following technical solutions: an electric folding wagon capable of being driven, the electric folding wagon comprising a folding wagon body, a control assembly and a steering rod assembly. A bottom of rear end of the folding wagon body is provided with follower wheels; the control assembly is arranged on the folding wagon body; the steering rod assembly includes a control rod, where the bottom end of the control rod is connected to a driving wheel assembly, the driving wheel assembly rotates along with the control rod; a pedal rod assembly is connected to the bottom end of the control rod and above the driving wheel assembly, and one end of the pedal rod assembly distal to the control rod is connected to a front end of the folding wagon body; and the driving wheel assembly is electrically connected to the control assembly

In a preferred embodiment, the driving wheel assembly includes: two electric wheels and a bracket, the two electric wheels are spaced apart in the bracket, the two electric wheels are coaxially arranged, the two electric wheels are electrically connected to the control assembly, respectively, and a wheel shaft is arranged at a top of the bracket , a mounting hole is formed at the bottom of the control rod, and the wheel shaft is inserted into the mounting hole and is detachably connected.

In a preferred embodiment, a connecting seat is disposed at the front end of the folding wagon body, and one end of the pedal rod assembly distal to the control rod is rotatably connected to the connecting seat.

In a preferred embodiment, the pedal rod assembly includes a support rod and a coupling member. Two support rods are provided, with identical ends of the two support rods being rotatably connected to two ends of the coupling member. The support rods are capable of rotating horizontally relative to the coupling member, and the coupling member is configured to connect the support rods and the control rod.

In a preferred embodiment, the coupling member includes two connecting portions and a coupling shaft. The two connecting portions are fixedly connected together through the coupling shaft. A shaft sleeve is rotatably connected to the coupling shaft, and one end of the shaft sleeve is movably sleeved over an outer side of the control rod.

In a preferred embodiment, two limiting rods for limiting a rotation angle of the shaft sleeve are arranged between the two connecting portions.

In a preferred embodiment, a first limiting device is disposed on an outer side of an end of the shaft sleeve that is connected to the coupling shaft. The first limiting device is configured to fix the rotation angle of the shaft sleeve relative to the coupling shaft. A second limiting device is disposed on an outer side of an end of the shaft sleeve that is connected to the control rod. The second limiting device is configured to fix a position of the shaft sleeve relative to the control rod.

In a preferred embodiment, a connecting member is disposed at an end of the support rod that is connected to the folding wagon body. The connecting member is rotatably connected to the folding wagon body, and the connecting member rotates vertically relative to the folding wagon body. The support rod is rotatably connected to the connecting member, and the support rod rotates horizontally relative to the connecting member.

In a preferred embodiment, two connecting seats are provided, and the two connecting seats are respectively located on both sides of the front end of the folding wagon body. Third limiting devices are fixedly arranged on respective opposite sides of the two connecting seats, and the third limiting devices are configured to restrict the rotation of the pedal rod assembly. The two third limiting devices are connected together via a pull cord.

In a preferred embodiment, a steering rod is slidably disposed within the control rod. A top of the steering rod is T-shaped, and two handlebars are rotatably connected to opposite ends at the top of the steering rod. A first sleeve is slidably disposed on an outer side of one end of each of the handlebars that is connected to the steering rod. A plurality of control buttons are arranged on a top surface of the steering rod, and the plurality of control buttons are electrically connected to the control assembly. A fourth limiting device is disposed on an outer side of a top of the control rod to limit sliding movement of the steering rod.

In a preferred embodiment, a display screen is disposed on the top surface of the steering rod facing toward the folding wagon body. The display screen is electrically connected to the control assembly.

In a preferred embodiment, an upwardly extending extension portion is disposed on an end of each of the two handlebars distal to a connection with the steering rod. A second sleeve is slidably disposed on one of the extension portions, and an auxiliary toggle key is disposed on the other extension portion. The auxiliary toggle key is electrically connected to the control assembly.

In a preferred embodiment, twist grips are arranged on the two handlebars; one of the twist grips is rotatably connected to the corresponding handlebar and is electrically connected to the control assembly; and the twist grip rotates about the handlebars as a rotational center axis and is configured to control a speed of the folding wagon body

In a preferred embodiment, the bottom of the control rod is provided with a pivot rod. A bottom of the pivot rod is connected to the driving wheel assembly, a top of the pivot rod is provided with pivot connecting lugs that are spaced apart, and an insertion hole is formed between the two pivot connecting lugs. A protrusion is disposed at the bottom end of the control rod, and the protrusion is inserted between the two pivot connecting lugs and is rotatably connected by a rotating shaft. A folding limiting member is slidably disposed within the bottom end of the control rod, and an end of the folding limiting member extends through the protrusion and is inserted into the insertion hole.

In a preferred embodiment, the control assembly includes a controller and at least one power supply electrically connected to the controller. The driving wheel assembly and the steering rod assembly are electrically connected to the controller, respectively.

The present disclosure has the following beneficial effects: through the pedal rod assembly and the steering rod assembly at the front end of the folding wagon body, the folding wagon body has the functions of electric human-carrying and goods-carrying driving, electric power-assisted towing and folded storage, and has the characteristics of light portability and convenient movement, so as to satisfy the use requirements of various scenarios; the steering rod assembly can change the use form according to the use requirements, such that the practicability is improved; and both the pedal rod assembly and the steering rod assembly are foldable and collapsible, such that the amount of space occupied is reduced, thereby further improving the practicability.

### BRIEF DESCRIPTION OF THE DRAWINGS

FIG. 1 is a schematic structural diagram of the present disclosure.
FIG. 2 is an exploded view of the present disclosure.
FIG. 3 is a schematic structural diagram of a folding wagon body according to the present disclosure.
FIG. 4 is a schematic structural diagram of a pedal rod assembly according to the present disclosure.
FIG. 5 is a schematic structural diagram of a steering rod assembly according to the present disclosure.
FIG. 6 is a diagram of a folding limiting member of the present disclosure in an unlocked state.
FIG. 7 is a diagram of a folding limiting member of the present disclosure in a locked state.
FIG. 8 is a diagram of a steering rod of the present disclosure in another use state.
FIG. 9 is a structural diagram of the present disclosure in a towing state.
FIG. 10 is a structural diagram of the present disclosure in a folded state.
FIG. 11 is a block diagram of electrical connection principles of the present disclosure.
FIG. 12 is a block diagram of a control box of the present disclosure.

### Reference numerals in the accompanying drawings:

10. folding wagon body; 11. connecting seat; 12. third limiting device; 13. follower wheel; 14. seat plate;
20. control assembly; 21. power supply; 22. controller;
30. steering rod assembly; 31. control rod; 311. protrusion; 32. steering rod; 321. handlebar; 322. first sleeve; 323. control button; 324. fourth limiting device; 325. display screen; 326. extension portion; 327. second sleeve; 328. auxiliary toggle key; 329. twist grip; 33. pivot rod; 331. pivot connecting lug; 332. insertion hole; 34. folding limiting member; 35. return spring; 36. coupling shaft sliding slot;
40. driving wheel assembly; 41. electric wheel; 42. bracket; 43. wheel shaft;
50. pedal rod assembly; 51. support rod; 52. connecting member; 53. coupling member; 531. connecting portion; 532. coupling shaft; 533. limiting rod; 534. shaft sleeve; 535. first limiting device; and 536. second limiting device.

### DETAILED DESCRIPTIONS OF THE EMBODIMENTS

To make the objectives, features, and advantages mentioned above of the present disclosure more apparent and easily understood, the specific implementation of the present disclosure will be described in detail below with reference to the drawings. Many specific details are set forth in the following description to facilitate thorough understanding of the present disclosure. However, the present disclosure can be implemented in many other ways different from those described herein, similar improvements can be made by those skilled in the art without departing from the connotation of the present disclosure, and therefore, the present disclosure is not limited by the specific implementation disclosed below.

In the description of the embodiments of the present disclosure, it should be noted that, unless otherwise expressly specified and defined, the terms "connection/connected" and "mounted" should be interpreted broadly. For example, "connection" can refer to a detachable connection or a non-detachable connection; it can refer to a direct connection or an indirect connection through an intermediate medium. In addition, "communication" can refer to direct communication or indirect communication through an intermediate medium. The term "fixed" refers to being connected such that a relative positional relationship remains unchanged after connection. Directional terms such as "inner," "outer," "top," "bottom," and the like used in the embodiments of the present disclosure are for illustrative purposes only, with reference to the orientation shown in the figures. Therefore, the directional terms used herein are for better and clearer explanation and understanding of the embodiments, rather than indicating or implying that the apparatus or element must have a specific orientation, or be constructed or operated in a specific orientation, therefore, these terms cannot be understood as limitation on the embodiments of the present disclosure.

In the description of the embodiments the present disclosure, the terms "first", and "second" are used for descriptive purposes only, and cannot be construed as indicating or implying relative importance or implicitly indicating the number of technical features indicated. Thus, features defined by "first" and "second" can explicitly or implicitly include one or more of the features.

In the embodiments of the present disclosure, the term "and/or" represents merely an association relationship describing associated objects, indicating that there can be three types of relationships, for example, A and/or B, which means three types of situation, that is, the existence of A alone, the existence of both A and B, and the existence of B alone. In addition, the character "/" herein generally indicates that the associated objects are in an "or" relationship.

Reference in the specification of the present disclosure to "an example" or "some examples", etc. means that one or more examples of the present disclosure include particular features, structures or characteristics described in combination with the examples. Accordingly, phrases such as "in one embodiment," "in some embodiments," "in other embodiments," and "in further embodiments," appearing in difference parts in the specification do not necessarily refer to the same embodiment, but rather mean "one or more but not all of the embodiments," unless specifically emphasized otherwise. The terms "include", "comprise", "have", and their variations mean "including but not limited to" or "comprising but not limited to", unless specifically emphasized otherwise. Therefore, the present disclosure is not limited to the specific embodiments disclosed below.

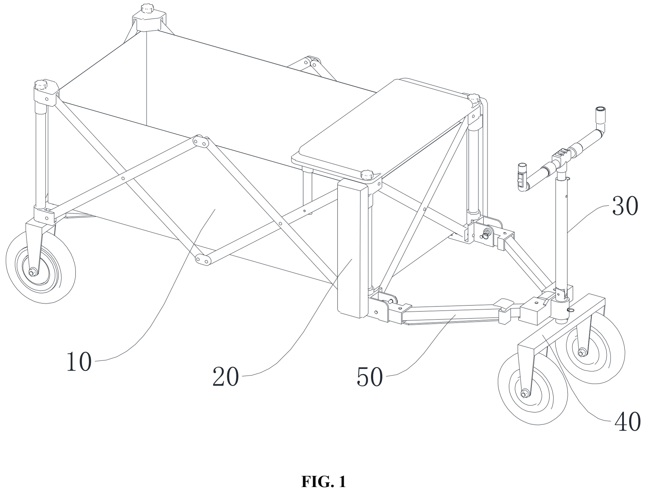

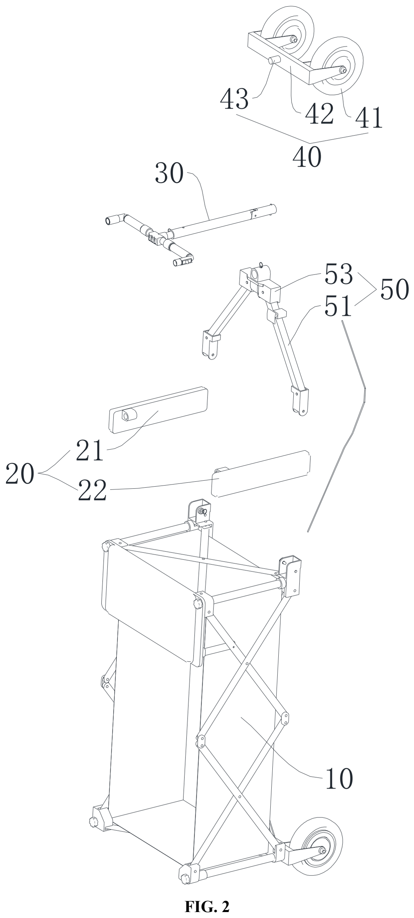

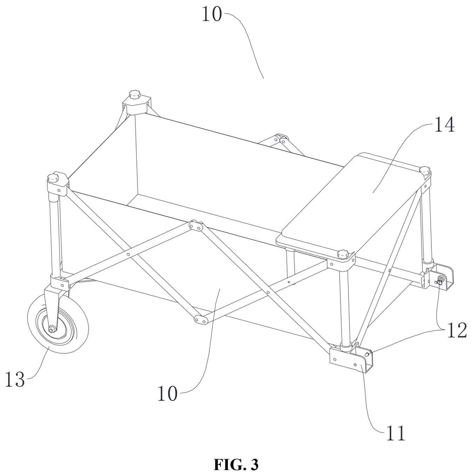

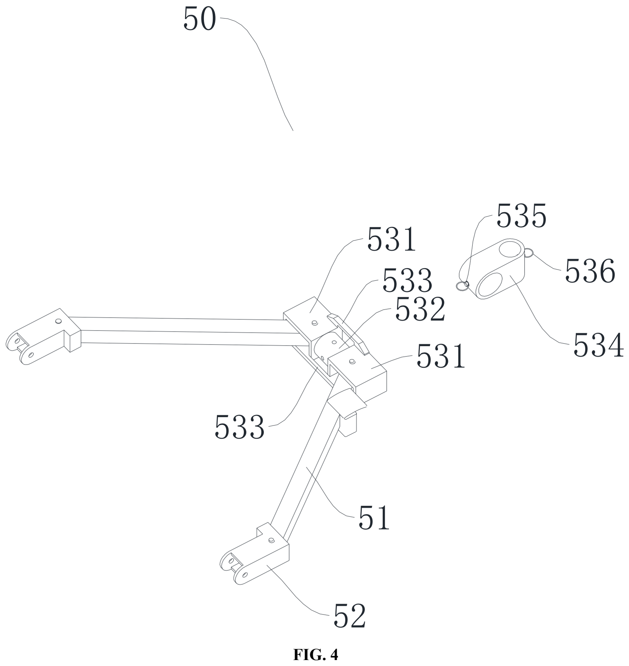

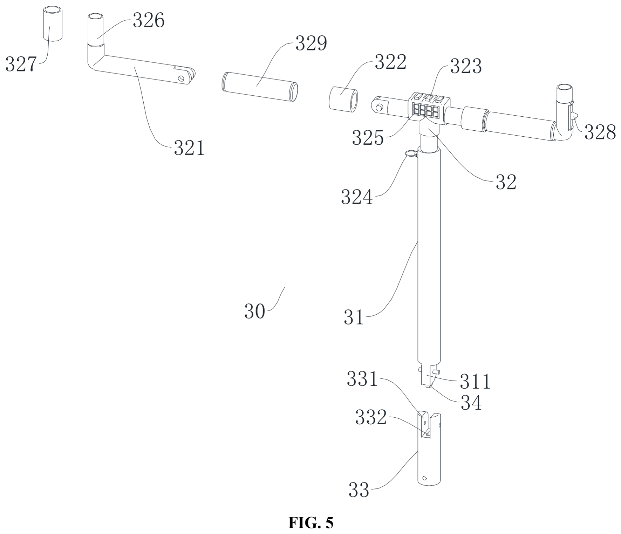

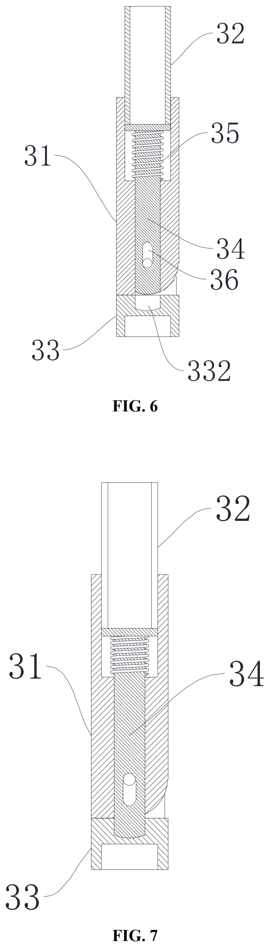

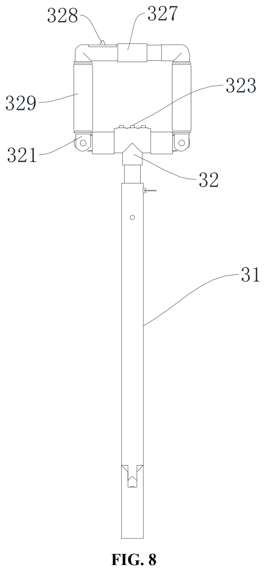

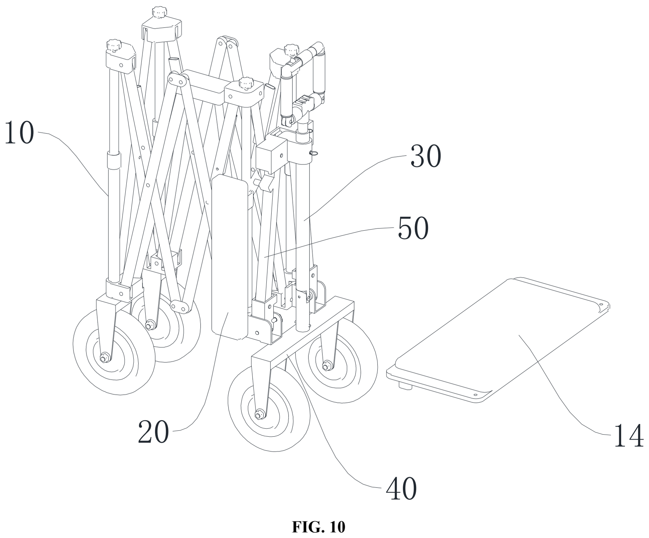

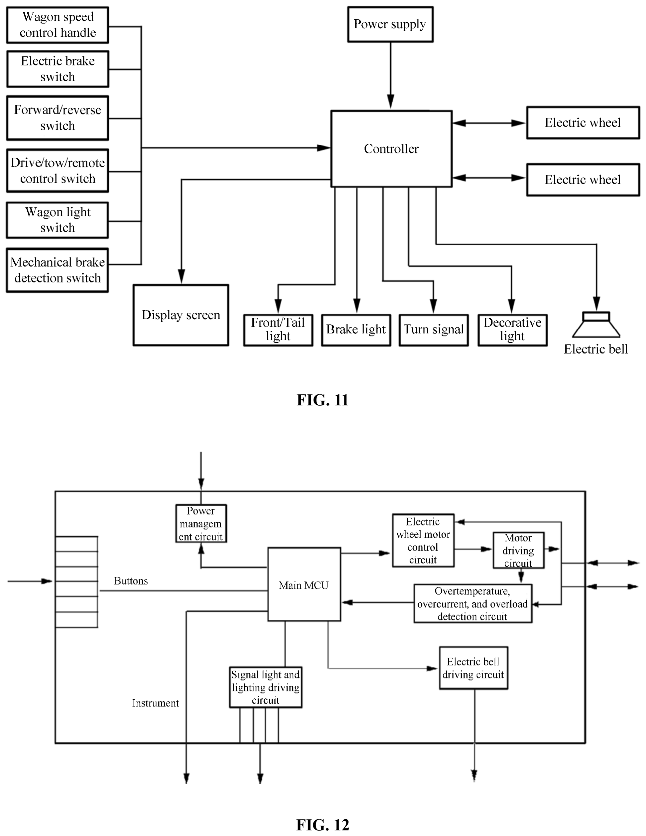

As shown in FIGs. 1-12, the present disclosure provides an electric folding wagon capable of being driven, wherein including a folding wagon body 10, a control assembly 20, and a steering rod assembly 30; follower wheels 13 are mounted at a bottom of tail end of the folding wagon body 10, and the control assembly 20 is arranged on the folding wagon body 10. The steering rod assembly 30 includes a control rod 31. A bottom end of the control rod 31 is connected to a driving wheel assembly 40, and the driving wheel assembly 40 rotates along with the control rod 31. A pedal rod assembly 50 is also connected to the bottom end of the control rod 31, and above the driving wheel assembly 40. The control rod 31 rotates relative to the pedal rod assembly 50, and one end of the pedal rod assembly 50 distal to the control rod 31 is connected to a front end of the folding wagon body 10. The driving wheel assembly 40 is electrically connected to the control assembly 20.

Specifically, the folding wagon body 10 is a foldable wagon commercially available on the market, and follower wheels 13 are arranged at the rear end of the folding wagon body 10. The follower wheels 13 are fixed wheels that cannot rotate horizontally. The steering rod assembly 30 is disposed at a front end of the folding wagon body 10, and the steering rod assembly 30 includes a control rod 31 and the driving wheel assembly 40 disposed at the bottom end of the control rod 31. The driving wheel assembly 40 rotates along with the rotation of the control rod 31. The steering rod assembly 30 is also configured to achieve electrical control. A pedal rod assembly 50 is arranged between the control rod 31 and the folding wagon body 10. One end of the pedal rod assembly 50 is connected to the control rod 31, and the other end is connected to the folding wagon body 10. The pedal rod assembly 50 is horizontally arranged between the control rod 31 and the folding wagon body 10, allowing a user to stand on the pedal rod assembly 50. In addition, the control assembly 20 is disposed at the front end of the folding wagon body 10, and the driving wheel assembly 40 is electrically connected to the control assembly 20. The user can control the operation of the driving wheel assembly 40 through the steering rod assembly 30, and control a direction through the steering rod assembly 30, thereby driving the folding wagon body 10 to move forward or backward, and enabling the folding wagon body 10 to carry people and cargo. In order to enhance the user experience, a detachable seat plate 14 can be arranged at the front end of the folding wagon body 10. When the folding wagon 10 is in a riding state, the rider can drive it while sitting on the folding wagon 10 by means of the seat plate 14.

Further, in this embodiment, the driving wheel assembly 40 includes: two electric wheels 41 and a bracket 42. The two electric wheels 41 are spaced apart in the bracket 42, the two electric wheels 41 are coaxially arranged, and the two electric wheels 41 are electrically connected to the control assembly 20, respectively. A wheel shaft 43 is arranged at a top of the bracket 42, and the wheel shaft 43 is inserted into the mounting hole and is detachably connected.

Specifically, the driving wheel assembly 40 includes two electric wheels 41 and the bracket 42 for connecting the two electric wheels 41. The electric wheels 41 are wheels with a motor and a braking structure arranged inside. The two electric wheels 41 are respectively fixed at both ends of the bracket 42 and are spaced apart at a predetermined distance. This distance can enlarge a support span between the two electric wheels 41, thereby increasing support force on both sides and preventing the folding wagon body from overturning when a center of gravity shifts away from the center during cornering and the folding wagon body 10 fails to provide a lateral support point. The two electric wheels 41 are coaxially arranged to ensure stability, and the two electric wheels 41 are electrically connected to the control assembly 20, respectively. The control assembly 20 controls the synchronous forward rotation, or synchronous reverse rotation, or asynchronous operation of the two electric wheels 41, thereby driving the folding wagon body 10 to move forward or backward. The asynchronous operation is used for cornering, with the control assembly 20 controlling the differential speed operation of the electric wheels 41. The vertical wheel shaft 43 is arranged at a center of a top surface of the bracket 42. Further, the mounting hole (not shown in the figures) is formed at the bottom end of the control rod 31. The mounting hole is adapted to receive the wheel shaft 43, and the wheel shaft 43 is inserted into the mounting hole and fixed by at least one fixing screw, preferably 2-3 screws equally spaced apart on a side wall of the control rod 31. One end of the fixing screw extends into the control rod 31 and is engaged with the wheel shaft 43 to fix the wheel shaft 43. Further, the fixing screw can be removed as needed, such that the driving wheel assembly 40 can be detached from the control rod 31.

It should be noted that the pedal rod assembly 50 is further provided with a foot brake. The foot brake is connected to the braking structure of the electric wheels 41 and/or the follower wheels through a braking cable. In the present application, the foot brake is preferably connected to the electric wheels 41.

Further, in this embodiment, a connecting seat 11 is disposed at a front end of the folding wagon body 10, and one end of the pedal rod assembly 50 distal to the control rod 31 is rotatably connected to the connecting seat 11.

Specifically, in order to facilitate a connection between the folding wagon body 10 and the pedal rod assembly 50, a connecting seat 11 is arranged at the front end of the folding wagon body 10. One end of the pedal rod assembly 50 distal to the control rod 31 is rotatably connected to the connecting seat 11 by a rotating shaft, such that, when needed, the pedal rod assembly 50 can rotate relative to the connecting seat 11, and the pedal rod assembly 50 can be folded relative to the folding wagon body 10 when the folding wagon body 10 is folded, thereby reducing an occupied space.

Further, in this embodiment, the pedal rod assembly 50 includes a support rod 51 and a coupling member 53. Two support rods 51 are provided, with identical ends of the two support rods 51 being rotatably connected to two ends of the coupling member 53. The support rods 51 are capable of rotating horizontally relative to the coupling member 53, and the coupling member 53 is configured to connect the support rods 51 with the control rod 31.

Specifically, two support rods 51 are provided, with identical ends of the two support rods 51 being rotatably connected to two ends of the coupling member 53 by a rotating shaft. The two support rods 51 can rotate horizontally relative to the coupling member 53. The two support rods 51 can be circular or rectangular. By rotating horizontally relative to the coupling member 53, the two support rods 51 can be arranged to form a triangle, a trapezoid, or a rectangle, and the like with the coupling member 53. The resulting shape is determined by an overall length of the coupling member 53. In the present disclosure, a trapezoid is preferred to improve stability. The two support rods 51 are connected to the control rod 31 via the coupling member 53, thereby allowing the control rod 31 to rotate relative to the support rods 51.

Further, the coupling member 53 includes two connecting portions 531 and a coupling shaft 532. The two connecting portions 531 are fixedly connected together through the coupling shaft 532. A shaft sleeve 534 is rotatably connected to the coupling shaft 532, and one end of the shaft sleeve 534 is movably sleeved over an outer side of the control rod 31.

Specifically, the coupling member 53 includes two connecting portions 531. Identical ends of the two support rods 51 are rotatably connected to the two connecting portions 531. A coupling shaft 532 is arranged between the two connecting portions 531, and the two connecting portions 531 are fixedly connected together through the coupling shaft 532. A shaft sleeve 534 is movably sleeved over the coupling shaft 532, and the shaft sleeve 534 can rotate vertically relative to the coupling shaft 532 on the coupling shaft 532, allowing the shaft sleeve 534 to drive rotation of the control rod 31 relative to the support rods 51. The shaft sleeve 534 is limited by the two connecting portions 531 and cannot move in an axial direction of the coupling shaft 532. One end of the shaft sleeve 534 distal to the coupling shaft 532 is movably sleeved over the outer side of the control rod 31, such that the control rod 31 can rotate horizontally relative to the shaft sleeve 534, and the shaft sleeve 534 can move in an axial direction of the control rod 31.

Further, two limiting rods 533 are arranged between the two connecting portions 531 to limit a rotation angle of the shaft sleeve 534.

Specifically, since the shaft sleeve 534 can rotate relative to the coupling shaft 532, two limiting rods 533 are arranged between the two connecting portions 531 to limit the shaft sleeve to a predetermined angle. The two limiting rods 533 are spaced apart at two positions, with one being arranged at a top side of the connecting portions 531, and the other being arranged at a side (that is, a rear side) of the connecting portions 531 facing the support rods 51. When the shaft sleeve 534 is rotated clockwise by a predetermined angle, it abuts against the limiting rod 533 at a rear side of the connecting portions 531. When the shaft sleeve 534 is rotated counterclockwise by a predetermined angle, it abuts against the limiting rod 533 at a top side of the connecting portions 531, such that the shaft sleeve 534 is limited in both rotational directions, and the stability and rationality of use are improved.

Further, in this embodiment, the first limiting device 535 is disposed on an outer side of one end of the shaft sleeve 534 that is connected to the coupling shaft 532. The first limiting device 535 is configured to fix the rotation angle of the shaft sleeve 534 relative to the coupling shaft 532. A second limiting device 536 is disposed on an outer side of one end of the shaft sleeve 534 that is connected to the control rod 31. The second limiting device 536 is configured to fix a position of the shaft sleeve 534 relative to the control rod 31.

Specifically, in order to prevent the shaft sleeve 534 from rotating relative to the coupling shaft 532 during use, a first limiting device 535 is disposed on an outer side of one end of the shaft sleeve 534 that is connected to the coupling shaft 532. The first limiting device 535 can be a limiting structure such as a spring latch, a gear, or a latch block. In the present disclosure, a spring latch is preferred due to its low cost, simple installation, and ease of use. The spring latch has a spring inside, such that a head of the spring latch automatically extends outward under the action of the spring. In addition, a latch hole (not shown in the figures) engaging with the first limiting device 535 is formed on the coupling shaft 532. Two latch holes are provided, and the two latch holes correspond to angles limited by the two limiting rods 533. That is, when the shaft sleeve 534 is limited by one of the limiting rods 533, the first limiting device 535 cooperates with one latch hole to fix the shaft sleeve 534 at one predetermined angle. When the shaft sleeve 534 is limited by the other limiting rod 533, the first limiting device 535 cooperates with the other latch hole to fix the shaft sleeve 534 at another predetermined angle. A second limiting device 536 is fixedly disposed on an outer side of one end of the shaft sleeve 534 that is connected to the control rod 31. The second limiting device 536 is configured to limit the movement in an axial direction of the shaft sleeve 534 relative to the control rod 31. A latch hole that is engaged with the second limiting device 536 is formed at the top of the control rod 31. When the shaft sleeve 534 moves to the top of the control rod 31, the second limiting device 536 cooperates with the latch hole at the position, thereby fixing the shaft sleeve 534 to the control rod 31.

It should be noted that the second limiting device 536 has a same structure as the first limiting device 535. Since no latch hole that is engaged with the second limiting device 536 is provided at a bottom of the control rod 31, the control rod 31 can rotate relative to the shaft sleeve 534, thereby driving the driving wheel assembly 40 to rotate.

Further, in this embodiment, a connecting member 52 is disposed at an end of the support rod 51 that is connected to the folding wagon body 10. The connecting member 52 is rotatably connected to the folding wagon body 10, and the connecting member 52 rotates vertically relative to the folding wagon body 10. The support rod 51 is rotatably connected to the connecting member 52, and the support rod 51 rotates horizontally relative to the connecting member 52.

Specifically, one end of the support rod 51 distal to the coupling member 53 is rotatably connected to the connecting member 52. The connecting member 52 is rotatably connected to the connecting seat 11 through a rotating shaft. The connecting member 52 can rotate vertically relative to the connecting seat 11, and the support rod 51 can rotate horizontally relative to the connecting member 52, such that the two support rods 51 can be brought close together or farther apart as needed. When folding is required, the support rod 51 can be lifted, and the support rod 51 rotates vertically relative to the folding wagon body 10 through the connecting member 52, bringing the support rod 51 to contact the front end of the folding wagon body 10. Subsequently, when the folding wagon body 10 is folded, both sides of the folding wagon body 10 are folded inward, the connecting member 52 is driven by the connecting seat 11, which in turn drives the two support rods 51 to rotate relative to the coupling member 53, making them approach each other in close contact.

It should be noted that an end of the connecting member 52 connected to the support rod 51 has a width greater than that of the support rod 51, such that the support rod 51 can rotate horizontally relative to the connecting member 52.

Further, in this embodiment, two connecting seats 11 are provided, and the two connecting seats 11 are respectively located on both sides of the front end of the folding wagon body 10. Third limiting devices 12 are fixedly arranged on respective opposite sides of the two connecting seats 11, and are configured to restrict the rotation of the pedal rod assembly 50. The two third limiting devices 12 are connected together via a pull cord.

Specifically, since two support rods 51 and two connectors 52 are provided, one connecting seat 11 is arranged on each side of the bottom of the front end of the folding wagon body 10. Third limiting devices 12 are arranged on respective opposite sides of the two connecting seats 11. When the connecting member 52 is in a horizontal position relative to the connecting seat 11, a rotation of the connecting member 52 relative to the connecting seat 11 is limited by the third limiting device 12. When the connecting member 52 is in a vertical position relative to the connecting seat 11, a rotation of the connecting member 52 relative to the connecting seat 11 is also limited by the third limiting device 12. The third limiting device 12 has a same structure as the first limiting device 535 and the second limiting device 536. The third limiting device 12 is located at an intersection of a top line when the connecting member 52 is in the horizontal position and a bottom line when the connecting member 52 is in the vertical position, thereby enabling a single third limiting device 12 to provide limiting effect in both positions.

To facilitate synchronous release of the limiting function of the two third limiting devices 12, the two third limiting devices 12 are connected together via a pull cord. When synchronous release is required, the limit relative to the connecting member 52 can be released simply by gripping the pull cord to rotate half a turn, making it simple and easy to use.

Further, in this embodiment, a steering rod 32 is slidably disposed within the control rod 31. The top of the steering rod 32 is T-shaped, and two handlebars 321 are rotatably connected to opposite ends at the top of the steering rod 32. A first sleeve 322 is slidably disposed on an outer side of one end of each of the handlebars 321 that is connected to the steering rod 32. A plurality of control buttons 323 are arranged on a top surface of the steering rod 32, and the plurality of control buttons 323 are electrically connected to the control assembly 20. A fourth limiting device 324 is disposed on an outer side of the top of the control rod 31 to limit sliding movement of the steering rod 32.

Specifically, the steering rod 32 is slidably disposed within the control rod 31, and the steering rod 32 can be extended out of the control rod 31 when needed to adjust an operating height. One end of the steering rod 32 extending out of the control rod 31 is T-shaped, and two ends of the top of the steering rod 32 are rotatably connected with the handlebars 321 through a rotating shaft. When in use, the two handlebars 321 can rotate vertically relative to the steering rod 32, such that the two handlebars 321 are in a horizontal position. When not in use, the handlebars can rotate vertically relative to the steering rod 32, such that the two handlebars 321 are in a vertical position. To fix the handlebars 321 relative to the steering rod 32 when in the horizontal position and prevent rotation, a first sleeve 322 is sleeved over a joint between the steering rod 32 and the handlebars 321. By sliding the first sleeve 322 to the joint, both ends of the first sleeve 322 encircle the steering rod 32 and the handlebars 321, thereby realizing the secure engagement of the steering rod 32 and the handlebars 321. To prevent the first sleeve 322 from sliding by itself and disengaging the joint between the steering rod 32 and the handlebars 321, a spring is connected to an end of the first sleeve 322 distal to the handlebars 321. Action force of the spring makes the first sleeve to always move in a direction toward the handlebars 321. Therefore, even though the first sleeve 322 is unintentionally pushed, it can automatically return to a position under the force of the spring. In addition, a plurality of control buttons 323 are arranged on a top surface of the steering rod 32, and the plurality of control buttons 323 are electrically connected to the control assembly 20 via wires. The wires can be routed from an interior of the control rod 31 to prevent exposure of wiring. The control buttons 323 include, but are not limited to, a forward/reverse button, a drive/tow switch button, a headlight on/off button, a horn button, and a turn signal control button. The control principle is similar to that employed in existing electric bicycles. Since the steering rod 32 and the control rod 31 are connected in a sliding manner, a fourth limiting device 324 is further arranged at the top of the control rod 31 to prevent the steering rod 32 from sliding back into the control rod 31 under gravity when extending out of the control rod 31. A plurality of latch holes that are engaged with the fourth limiting device 324 are formed at intervals on an outer side wall of the steering rod 32. The fourth limiting device 324 is engaged with the latch holes, thereby fixing an extension length of the steering rod 32 relative to the control rod 31. The fourth limiting device 324 has a structure same as the first limiting device 535 and the second limiting device 536.

It should be noted that the control buttons 323 can also be resistive buttons, which reduces a number of conductive cores in the wires. Each resistive button has a different resistance value. When a button is pressed, a corresponding resistance value is transmitted, and a resistance signal is transmitted to the control assembly 20 through the wire. The control assembly 20 receives the resistance signal, identifies a function of the pressed button based on the resistance value, and takes the corresponding control action.

Further, a display screen 325 is disposed on the top of the steering rod 32 oriented toward the folding wagon body 10. The display screen 325 is electrically connected to the control assembly 20.

Specifically, a display screen 325 is disposed on the top of the steering rod 32, and the display screen 325 is electrically connected to the control assembly 20, and is configured to display a current driving speed, a driving mode, a power level of a power supply 21, and other information. The display screen 325 faces toward the folding wagon body 10.

Further, an upwardly extending extension portion 326 is disposed on an end of each of the two handlebars 321 distal to a connection with the steering rod 32. A second sleeve 327 is slidably disposed on one of the extension portions 326, and an auxiliary toggle key 328 is disposed on the other extension portion 326. The auxiliary toggle key 328 is electrically connected to the control assembly 20.

Specifically, in order to enable the steering rod 32 to be used in a towing state, an upwardly extending extension portion 326 is disposed on an end of each of the two handlebars 321 distal to a connection with the steering rod 32. When the two handlebars 321 are rotated upward, the extension portions 326 on the two handlebars 321 oppose and contact each other, thereby forming a rectangular ring together with the handlebars 321 and the steering rod 32, so as to facilitate towing in the towing state. In order to prevent the two extension portions 326 from disengaging from the opposed and contact state, a second sleeve 327 is movably disposed on one of the extension portions 326. When the two extension portions 326 oppose and contact each other, the second sleeve 327 can be slid to a contact position of the two extension portions 326, and the two extension portions 326 are prevented from separating by means of the restriction of the second sleeve 327. When the two extension portions 326 need to be separated, the second sleeve 327 can be simply pushed apart. An auxiliary toggle key 328 is disposed on the other extension portion 326, on which no second sleeve 327 is provided. The auxiliary toggle key 328 is electrically connected to the control assembly 20. The auxiliary toggle key 328 is configured to achieve towing assistance effect in the towing state. Specifically, by toggling the auxiliary toggle key 328, the electric wheels 41 are driven to operate at a uniform speed, thereby providing a towing assistance effect.

In order to prevent the second sleeve 327 from sliding freely on the two extension portions 326, a tail end of the second sleeve 327 is connected to one of the corresponding extension portions 326 via a spring. When the two extension portions 326 oppose and contact each other, the second sleeve 327 is driven to move in a direction of the other extension portion 326 under action force of a spring, thereby achieving secure engagement between the two extension portions 326. In addition, the spring can prevent undesired sliding, which could otherwise cause the two extension portions 326 to disengage from an opposed state.

It should be noted that both the first sleeve 322 and the second sleeve 327 are restricted on the steering rod 32 or the extension portions 326 via a protruding ring on an inner wall, preventing them from being completely disengaged.

Further, a twist grip 329 is arranged on each of the handlebars 321. One of the twist grips 329 is rotatably connected to the corresponding handlebar 321 and is electrically connected to the control assembly 20. The twist grip 329 rotates about the handlebars 321 as a rotational center axis and is configured to control a speed of the folding wagon body 10.

Further, a twist grip 329 is arranged on each of the handlebars 321. One of the twist grips 329 is electrically connected to the control assembly 20, and is configured to control a speed of the electric wheels 41. The control principle is that an angle position sensor is arranged on the twist grip 329, and a rotation angle of the twist grip 329 is transmitted to the control assembly 20 through the angle position sensor, and the control assembly 20 then adjusts an output power of the electric wheels 41 according to a corresponding voltage or current output controlled by the rotation angle, thereby controlling a speed.

It should be noted that the other twist grip 329 can also be configured as a rotatable structure. The rotatable twist grip 329 can be connected to an electronic braking structure. A rotation speed of the electric wheels 41 can be controlled through the rotation of the twist grip 329 to achieve braking and improve braking performance. The control principle is the same as that of the twist grip 329 for speed control, with the difference being that when a speed is controlled, the greater the rotation angle of the twist grip 329, the faster the speed, while when braking is performed, the greater the rotation angle of the twist grip 329, the greater the braking force.

Further, the bottom of the control rod 31 is provided with a pivot rod 33. A bottom of the pivot rod 33 is connected to the driving wheel assembly 40. A top of the pivot rod 33 is provided with pivot connecting lugs 331 that are spaced apart, and an insertion hole 332 is formed between the two pivot connecting lugs 331. A protrusion 311 is disposed at the bottom end of the control rod 31, and the protrusion 311 is inserted between the two pivot connecting lugs 331 and is rotatably connected by a rotating shaft. A folding limiting member 34 is slidably disposed within the bottom end of the control rod 31, and an end of the folding limiting member 34 extends through the protrusion 311 and is inserted into the insertion hole 332.

Specifically, in order to improve the convenience of operation during towing, a pivot rod 33 is provided at the bottom of the control rod 31, and the driving wheel assembly 40 can be detachably connected to the pivot rod 33. The top of the pivot rod 33 is provided with pivot connecting lugs 331 that are spaced apart. In addition, the bottom of the control rod 31 is provided with a protrusion 311, and the protrusion 311 has a spacing that matches the two pivot connecting lugs 331, such that the protrusion 311 can be inserted between the two pivot connecting lugs 331. To achieve rotatable connection, the protrusion 311 and the two pivot connecting lugs 331 are connected by a rotating shaft, enabling the control rod 31 to rotate relative to the pivot rod 33. To prevent the control rod 31 from rotating relative to the pivot rod 33 when not in use, a folding limiting member 34 is slidably disposed within the bottom within the control rod 31. The folding limiting member 34 can slide vertically within the control rod 31. An end of the folding limiting member 34 extends through the protrusion 311, and a return spring 35 is disposed at an end of the folding limiting member 34 within the control rod 31. When the folding limiting member 34 is pressed by the steering rod 32, and the end of the folding limiting member 34 extends through the protrusion 311, and the return spring 35 is compressed by the folding limiting member 34 at the same time. When the force applied by the steering rod 32 is released, the folding limiting member 34 is retracted into the control rod 31 under the restoring force of the return spring 35. In addition, to enable the folding limiting member 34 within the control rod 31 to cooperate with the pivot rod 33 for secure engagement, an insertion hole 332 is formed between the two pivot connecting lugs 331 at the top of the pivot rod 33. When an end of the folding limiting member 34 extends through the protrusion 311 and is then inserted into the insertion hole 332, the folding limiting member 34 cooperates with the insertion hole 332 to restrict the rotation of the control rod 31 relative to the pivot rod 33. Specifically, a coupling shaft sliding slot 36 is formed in a middle of the folding limiting member 34, a coupling shaft connecting the control rod 31 and the pivot rod 33 is located within the coupling shaft sliding slot 36, which allows the folding limiting member 34 to slide relative to the coupling shaft between the control rod 31 and the pivot rod 33. After the force applied by the steering rod 32 to the folding limiting member 34 is released, the return spring 35 pushes the folding limiting member 34 upward, in which case, a distance lifted by the folding limiting member 34 is limited by the coupling shaft, and can be adjusted via a length of the coupling shaft sliding slot 36.

Further, in this embodiment, the control assembly 20 includes a controller 22 and at least one power supply electrically connected to the controller 22. The driving wheel assembly 40 and the steering rod assembly 30 are electrically connected to the controller 22, respectively. Specifically, the controller 22 is configured to receive control signals from the steering rod assembly 30 and control the operation of the driving wheel assembly 40 based on the received control signals. The power supply is configured to provide electrical energy to the control and the driving wheel assembly 40.

Folding process: As shown in FIG. 1, when folding is required in a riding state, the folding wagon body 10 can first be folded inward. The two support rods 51 will be driven by the folding wagon body 10 to move closer to each other. The third limiting device 12 can be then pulled, causing the support rods 51 to rotate vertically toward the folding wagon body 10, and lifting the steering rod assembly 30 and the driving wheel assembly 40 at the same time, in which case, the first limiting device 535 can be released, allowing the shaft sleeve 534 to rotate relative to the coupling shaft 532, thereby converting the control rod 31 from an original position perpendicular to the support rods 51 to a position parallel to the support rods 51. Since the shaft sleeve 534 is still located on the end of the control rod 31 adjacent to the driving wheel assembly 40, the steering rod 32 remains at a relatively high height. By sliding the control rod 31 in an axial direction relative to the shaft sleeve 534, the driving wheel assembly 40 is brought into contact with a ground, in which case, the shaft sleeve 534 is positioned at the top of the control rod 31 and can be engaged with the latch holes at the top of the control rod 31 through the second limiting device 536, thereby realizing the secure engagement between the shaft sleeve 534 and the control rod 31, and completing the folding process.

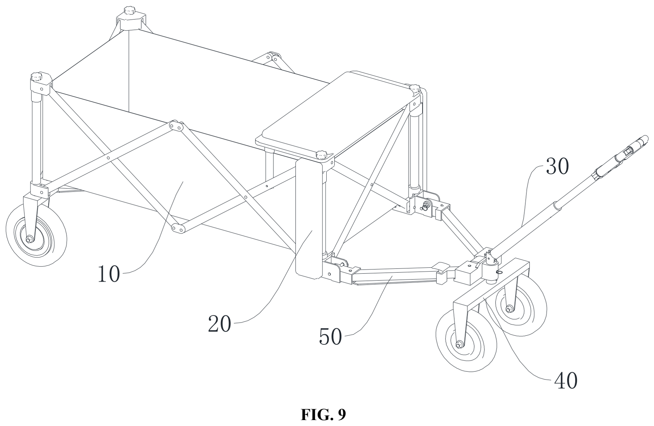

Towing state: As shown in FIG. 9, in a riding state, the steering rod 32 is extended out of the control rod 31. The bottom of the steering rod 32 is disengaged from the folding limiting member 34. Under the action force of the return spring 35, the folding limiting member 34 is pushed upward, causing the end of the folding limiting member 34 to disengage from the insertion hole 332. After the folding limiting member 34 is no longer engaged with the control rod 31 and the pivot rod 33, the control rod 31 can be driven to rotate relative to the pivot rod 33. In addition, a height of the steering rod 32 is fixed by the fourth limiting device 324, and the control rod 31 is positioned at an inclined angle relative to the pivot rod 33, thereby completing the conversion to the towing state. When it is necessary to return to the riding state, the control rod 31 is rotated to a vertical state relative to the pivot rod 33, and the steering rod 32 is pressed back into the control rod 31. The folding limiting member 34 is compressed by the bottom of the steering rod 32, causing it to extend through the control rod 31 and engage with the pivot rod 33. The steering rod 32 is fixed by the fourth limiting device 324, thereby realizing the limitation between the control rod 31 and the pivot rod 33, and completing the conversion to the riding state.

In summary, through the pedal rod assembly and the steering rod assembly at the front end of the folding wagon body, the folding wagon body has the functions of electric human-carrying and goods-carrying driving, electric power-assisted towing and folded storage, and has the characteristics of light portability and convenient movement, so as to satisfy the use requirements of various scenarios; the steering rod assembly can change the use form according to the use requirements, such that the practicability is improved; and both the pedal rod assembly and the steering rod assembly are foldable and collapsible, such that the amount of space occupied is reduced, thereby further improving the practicability.

The present disclosure is not only limited to the descriptions in the specification and implementations, such that those skilled in the art can easily achieve additional advantages and modifications. Therefore, the present disclosure is not limited to specific details, representative apparatus and illustrative examples shown and described herein without departing from the spirit and scope of the general concept as defined by the appended claims and equivalents thereof.

## Claims

1. An electric folding wagon capable of being driven, comprising a folding wagon body, a control assembly and a steering rod assembly, wherein a bottom of rear end of the folding wagon body is provided with follower wheels; the control assembly is arranged on the folding wagon body; the steering rod assembly comprises a control rod, a bottom end of the control rod is connected to a driving wheel assembly, the driving wheel assembly rotates along with the control rod, and a pedal rod assembly is connected to the bottom end of the control rod and above the driving wheel assembly; the control rod is capable of rotating relative to the pedal rod assembly, and one end of the pedal rod assembly distal to the control rod is connected to a front end of the folding wagon body; and the driving wheel assembly is electrically connected to the control assembly.

2. The electric folding wagon capable of being driven according to claim 1, wherein the driving wheel assembly comprises two electric wheels and a bracket; the two electric wheels are spaced apart within the bracket, the two electric wheels are coaxially arranged, the two electric wheels are electrically connected to the control assembly, respectively, and a wheel shaft is arranged at a top of the bracket; and a mounting hole is formed at a bottom of the control rod, and the wheel shaft is inserted into the mounting hole and is detachably connected.

3. The electric folding wagon capable of being driven according to claim 1, wherein a connecting seat is disposed at the front end of the folding wagon body, and one end of the pedal rod assembly distal to the control rod is rotatably connected to the connecting seat.

4. The electric folding wagon capable of being driven according to claim 1, wherein the pedal rod assembly comprises a support rod and a coupling member; two support rods are provided, and identical ends of the two support rods are rotatably connected to two ends of the coupling member, respectively; and the support rods are capable of rotating horizontally relative to the coupling member, and the coupling member is configured to connect the support rods and the control rod.

5. The electric folding wagon capable of being driven according to claim 4, wherein the coupling member comprises two connecting portions and a coupling shaft; the two connecting portions are fixedly connected together through the coupling shaft; and a shaft sleeve is rotatably connected to the coupling shaft, and one end of the shaft sleeve is movably sleeved over an outer side of the control rod.

6. The electric folding wagon capable of being driven according to claim 5, wherein two limiting rods for limiting a rotation angle of the shaft sleeve are arranged between the two connecting portions.

7. The electric folding wagon capable of being driven according to claim 5, wherein a first limiting device is disposed on an outer side of an end of the shaft sleeve that is connected to the coupling shaft; the first limiting device is configured to fix the rotation angle of the shaft sleeve relative to the coupling shaft; and a second limiting device is disposed on an outer side of an end of the shaft sleeve that is connected to the control rod, and the second limiting device is configured to fix a position of the shaft sleeve relative to the control rod.

8. The electric folding wagon capable of being driven according to claim 4, wherein a connecting member is disposed at an end of the support rod that is connected to the folding wagon body; and the connecting member is rotatably connected to the folding wagon body, the connecting member is capable of rotating vertically relative to the folding wagon body, the support rod is rotatably connected to the connecting member, and the support rod is capable of rotating horizontally relative to the connecting member.

9. The electric folding wagon capable of being driven according to claim 3, wherein two connecting seats are provided, and the two connecting seats are respectively located on both sides of the front end of the folding wagon body; third limiting devices are fixedly arranged on respective opposite sides of the two connecting seats, and the third limiting devices are configured to restrict the rotation of the pedal rod assembly; and the two third limiting devices are connected together via a pull cord.

10. The electric folding wagon capable of being driven according to claim 1, wherein a steering rod is slidably disposed within the control rod; a top of the steering rod is T-shaped, and two handlebars are rotatably connected to opposite ends at the top of the steering rod; a first sleeve is slidably disposed on an outer side of one end of each of the handlebars that is connected to the steering rod; a plurality of control buttons are arranged on a top surface of the steering rod, and the plurality of control buttons are electrically connected to the control assembly; and a fourth limiting device is disposed on an outer side of a top of the control rod to limit sliding movement of the steering rod.

11. The electric folding wagon capable of being driven according to claim 10, wherein a display screen is disposed on the top surface of the steering rod facing toward the folding wagon body, and the display screen is electrically connected to the control assembly.

12. The electric folding wagon capable of being driven according to claim 10, wherein an upwardly extending extension portion is disposed on an end of each of the two handlebars distal to a connection with the steering rod; a second sleeve is slidably disposed on one of the extension portions, and an auxiliary toggle key is disposed on the other extension portion; and the auxiliary toggle key is electrically connected to the control assembly.

13. The electric folding wagon capable of being driven according to claim 10, wherein twist grips are arranged on the two handlebars; one of the twist grips is rotatably connected to the corresponding handlebar and is electrically connected to the control assembly; and the twist grip is capable of rotating about the handlebar as a rotation center axis and is configured to control a speed of the folding wagon body.

14. The electric folding wagon capable of being driven according to claim 1, wherein the bottom of the control rod is provided with a pivot rod; and a bottom of the pivot rod is connected to the driving wheel assembly, a top of the pivot rod is provided with pivot connecting lugs that are spaced apart, and an insertion hole is formed between the two pivot connecting lugs; a protrusion is disposed at the bottom end of the control rod, and the protrusion is inserted between the two pivot connecting lugs and is rotatably connected by a rotating shaft; and a folding limiting member is movably disposed within the bottom end of the control rod, and an end of the folding limiting member extends through the protrusion and is inserted into the insertion hole.

15. The electric folding wagon capable of being driven according to claim 1, wherein the control assembly comprises a controller and at least one power supply electrically connected to the controller, and the driving wheel assembly and the steering rod assembly are electrically connected to the controller, respectively.
